# EUROPÄISCHE PATENTSCHRIFT

(11) **EP 1 724 568 B1**
(45) Veröffentlichungstag und Bekanntmachung des Hinweises auf die Patenterteilung: **07.07.2010**
(21) Anmeldenummer: 06008071.0
(22) Anmeldetag: 19.04.2006
(51) Int. Cl.: G01N 21/43, B60S 1/08

(54) **Optoelektronische Sensoreinrichtung**
Optoelectronic sensor device
Dispositif détecteur optoélectronique

(30) Priorität: 21.04.2005 DE 102005018379
(43) Veröffentlichungstag der Anmeldung: 22.11.2006
(73) Patentinhaber: Leopold Kostal GmbH & Co. KG, 58507 Lüdenscheid (DE)
(72) Erfinder: Georgiadis, Christos, Dr., 44379 Dortmund (DE); Röhr, Michael, 44265 Dortmund (DE); Hagen, Frank, 58511 Lüdenscheid (DE); Weber, Thomas, 58513 Lüdenscheid (DE); Richwin, Matthias, Dr., 41439 Dortmund (DE)

(56) Entgegenhaltungen:
- WO-A1-03/101795
- DE-A1- 10 001 705
- US-A1- 2003 160 158

## Beschreibung

Die Erfindung betrifft eine optoelektronische Sensoreinrichtung zur Erfassung der Benetzung einer transparenten Kraftfahrzeug-Scheibe mit Niederschlag, umfassend auf einem ersten Schaltungsträger angeordnete Strahlensender und Strahlenempfänger, diesen jeweils zugeordnete Strahlformungsmittel zur Parallelisierung der von dem Strahlensender abgegebenen und zur Fokussierung der nach zumindest einer an der Außenfläche der Scheibe stattfindenden Reflexion dem Strahlenempfänger zustrebenden Strahlung, sowie ein Koppelelement zur Ein- und Auskopplung der optischen Strahlung in die Kraftfahrzeugscheibe, wobei zwischen dem Koppelelement und dem ersten Schaltungsträger ein mit Halteelementen zur Aufnahme und Positionierung eines zweiten Schaltungsträgers in der Nähe der Scheibe versehenes Konstruktionselement angeordnet ist.

Eine solche optoelektronische Sensoreinrichtung ist aus der WO 03/101795 A1 bekannt. Bei dieser gattungsgemäßen Sensoreinrichtung sind die funktionalen Elemente Strahlformungsmittel und Koppelelement an ein und demselben körperlichen Element verwirklicht, so dass die Strahlformungsmittel direkt, also insbesondere ohne Luftzwischenraum mit der Scheibe verbunden und somit auf eine feste Scheibendicke eingestellt sind.

Aus der DE 101 04 653 A1 ist weiterhin eine optoelektronische Sensoreinrichtung bekannt, bei der an der Innenfläche der Scheibe Profilierungen vorhanden sind, die einerseits parallel zu einer Strahlenaustrittsfläche des Strahlenleitkörpers ausgerichtete Strahleneinkoppelbereiche und andererseits parallel zu einer Strahleneintrittsfläche des Strahlenleitkörpers ausgerichtete Strahlenauskoppelbereiche aufweisen, und somit eine direkte optische Ankopplung des Strahlenleitkörpers an die Scheibeninnenseite verzichtbar machen. Um ohne konstruktive Änderung des Strahlenleitkörpers bei mehreren verschiedenen Scheibendicken eine optimale Ausnutzung des Strahlenbündelquerschnitts zu ermöglichen, sind bei dieser optoelektronischen Sensoreinrichtung an dem Strahlenleitkörper selbst und/oder an einem zu seiner Halterung an der Scheibe vorgesehenen Sockel Mittel zur Einstellung des Abstandes der Strahlenein- und -austrittsflächen von der Innenfläche der Scheibe vorhanden.

Mit der vorliegenden Erfindung lässt sich gegenüber den vorbekannten Sensoreinrichtungen eine erweiterte Funktionalität realisieren bei gleichzeitig deutlich kompakterem und gegen Störeinflüsse robusterem Aufbau des gesamten Sensors.

Dies gelingt erfindungsgemäß dadurch, dass durch das Konstruktionselement Mittel zur Einstellung des Abstandes der Strahlformungsmittel von der Scheibe gebildet sind.

Bei den Mitteln zur Einstellung des Abstandes der Strahlformungsmittel von der Innenfläche der Scheibe handelt es sich vorzugsweise um einstückig mit dem Konstruktionselement ausgeführte Auflage- und/oder Abstützelemente, die einerseits dem Koppelement und andererseits einem die Strahlformungsmittel tragenden Linsenträger zugeordnet sind.

Um Schutz gegen ESD oder Missbrauchskräfte zu bieten, bzw. die elektromagnetische Verträglichkeit der darunter angeordneten Schaltung zu verbessern überdeckt das Konstruktionselement als Abdeckung Teile des zweiten Schaltungsträgers. Eine solche Abdeckung kann dabei teilweise aus Metall bestehen oder mit einem metallischen oder leitfähigen Überzug versehen sein.

In einer vorteilhaften Weiterbildung der erfindungsgemäßen Einrichtung ist vorgesehen, dass weitere Strahlenempfänger, etwa zur Erfassung der Lichtverhältnisse außerhalb des Kraftfahrzeuges oder zur Erfassung der in das Fahrzeug eindringenden Sonnenstrahlung in der Sensoreinrichtung integriert sind. Solche Strahlenempfänger können ebenfalls auf dem ersten Schaltungsträger angeordnet sein. In diesem Fall ist es z.B. möglich auch diesen Strahlformungsmittel zuzuordnen, die ebenfalls in dem Linsenträger angeordnet sind. Bevorzugt ist aber zumindest ein solcher Strahlenempfänger auf dem zweiten Schaltungsträger, der innerhalb der Sensoreinrichtung zwischen dem ersten Schaltungsträger und dem Konstruktionselement in der Nähe der Scheibe positioniert ist, angeordnet.

Im Rahmen dieser vorteilhaften Weiterbildung können auch durch das Konstruktionselement weitere Funktionen erfüllt sein. So kann dieses etwa im Bereich seiner Überdeckung mit den zusätzlichen Strahlenempfängern mit refraktiven oder diffraktiven Strukturen oder mit die Orts- und Winkelabhängigkeit bzw. die spektrale Zusammensetzung der Strahlung beeinflussenden Blendenstrukturen und/oder optischen Filtern versehen sein.

Die optische Wirkung der Strahlformungsmittel kann ergänzt bzw. erweitert werden, etwa um verschiedene Varianten der Sensoreinrichtung zu realisieren, indem das Konstruktionselement als zumindest Teile der Strahlformungsmittel überdeckende Abdeckung ausgebildet und mit refraktiven oder diffraktiven Strukturen versehen ist.

Durch Blendenstrukturen und/oder optische Filter in der die Strahlformungsmittel überdeckenden Abdeckung können die Orts- und Winkelabhängigkeit bzw. die spektrale Zusammensetzung der Strahlung beeinflußt werden.

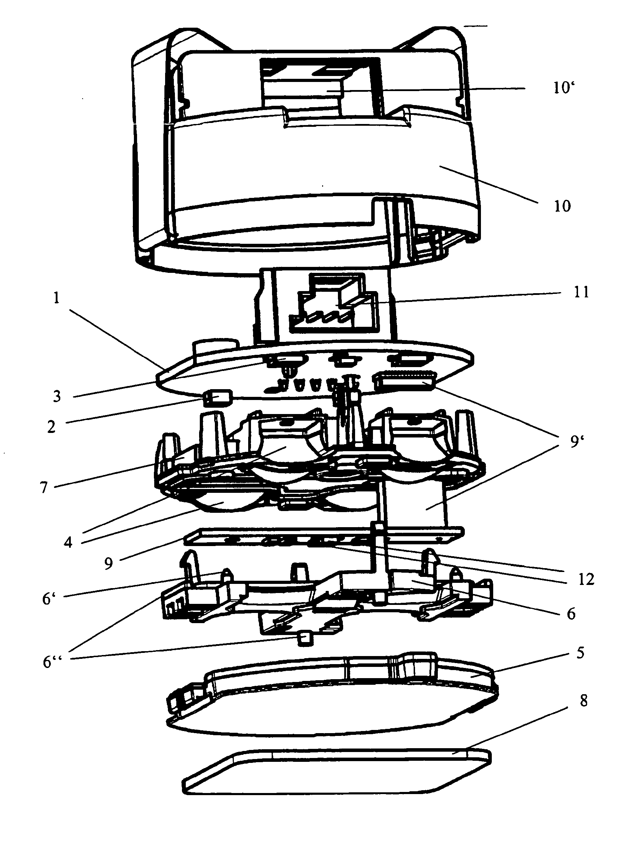

Weitere Ausgestaltungen und zweckmäßige Weiterbildungen der erfindungsgemäßen Sensoreinrichtung sind in den zusätzlichen Unteransprüchen angegeben und gehen auch aus der nachfolgenden Beschreibung des in der Zeichnung dargestellten Ausführungsbeispiels hervor.

Die einzige Figur zeigt eine erfindungsgemäße Sensoreinrichtung in einer Explosionsdarstellung. Wie aus dieser zu sehen ist, umfasst die optoelektronische Sensoreinrichtung einen als elektrische Leiterplatte ausgeführten Schaltungsträger 1, auf dem Strahlensender 2 sowie Strahlenempfänger 3 angeordnet sind, die als SMD-Bauteile ausgeführt sind. Diesem Schaltungsträger 1 unmittelbar zugeordnet ist ein Linsenträger 7, der die zur Parallelisierung der von dem Strahlensender 2 abgegebenen und zur Fokussierung der nach zumindest einer an der Außenfläche der Scheibe stattfindenden Reflexion dem Strahlenempfänger 3 zustrebenden Strahlung vorgesehenen linsenförmig ausgebildeten Strahlformungsmittel 4 aufnimmt. An der Innenfläche der hier nicht dargestellten Scheibe ist mittels einer optisch transparenten Klebeschicht 8 ein mit einer Profilierung versehenes Koppelelement 5 optisch leitend angekoppelt. Durch Strahleneinkoppelbereiche dieses Koppelmittels 5 tritt das durch das dem Strahlensender 2 zugeordnete linsenförmige Strahlformungsmittel 4 parallelisierte Strahlenbündel in die Scheibe ein und gelangt zur Außenfläche derselben, wo es totalreflektiert wird. Das Strahlenbündel tritt dann durch Strahlenauskoppelbereiche des Koppelmittels 5 wieder aus der Scheibe aus und wird durch das dem Strahlenempfänger 3 zugeordnete linsenförmige Strahlformungsmittel 4 auf diesen fokussiert. Die zur Erreichung der für die Sensorfunktion bei einer vorgegebenen Scheibendicke korrekten Strahlengeometrie erforderlichen Abstände zwischen der Scheibe, den Strahlformungsmitteln 4 und den Strahlensendern 2 und Strahlenempfängern 3 wird durch ein Konstruktionselement 6 realisiert, welches zwischen dem Koppelmittel 5 und dem die Strahlformungsmittel 4 tragenden Linsenträger 7 angeordnet ist. Die Position des Linsenträgers 7 zwischen dem Konstruktionselement 6 und dem Schaltungsträger 1 und damit die Position der Strahlformungsmittel 4 bezüglich der Scheibe wird durch entsprechende Auflage- bzw. Abstützelemente 6" an dem Konstruktionselement 6 eingestellt. Das Konstruktionselement 6 stützt sich dabei mit diesen Auflage- bzw. Abstützelemente 6" einerseits an dem Koppelmittel 5 und andererseits an dem Linsenträger 7 ab.

Ein zweiter Schaltungsträger 9, der Heizelemente zur Einstellung der Sensortemperatur sowie weitere etwa zur Erzeugung von Signalen zur Steuerung der Fahrzeugbeleuchtung oder einer Klimaanlage vorgesehene Strahlenempfänger 12 trägt, ist zwischen dem Linsenträger 7 und dem Konstruktionselement 6 angeordnet und über eine Steckverbindung 9' mit dem primären Schaltungsträger 1 elektrisch verbunden. Zur Aufnahme und Befestigung dieses Schaltungsträgers 9 in seiner scheibennahen Position ist das Konstruktionselement 6 mit entsprechenden Halteelementen 6' versehen.

In dem Bereich zwischen der Scheibe und den Strahlenempfängern 12 auf dem zweiten Schaltungsträger 9 ist das Konstruktionselement 6 mit refraktiven oder diffraktiven Strukturen zur Strahlformung der einfallenden Strahlung bzw. mit die Orts- und Winkelabhängigkeit bzw. die spektrale Zusammensetzung der Strahlung beeinflussenden Blendenstrukturen und/oder optischen Filtern versehen.

Neben diesen genannten Funktionen kann das Konstruktionselement 6 auch dazu dienen, etwa die Leistung einer auf einem der Schaltungsträger 1, 9 vorhandenen Heizung zu lenken oder zu homogenisieren oder Befestigungskräfte von dem Koppelelement 8 zu anderen Elementen der Einrichtung zu leiten. Die gesamte Sensoreinrichtung ist in einem Gehäuse 10 aufgenommen, das eine Öffnung 10' aufweist, durch die ein zum Anschluss des Sensors an das Bordnetz des Fahrzeugs vorgesehener, auf dem Schaltungsträger 1 angeordneter Steckverbinder 11 von außen zugänglich ist.

## Patentansprüche

1. Optoelektronische Sensoreinrichtung zur Erfassung der Benetzung einer transparenten Kraftfahrzeug-Scheibe mit Niederschlag, umfassend auf einem ersten Schaltungsträger (1) angeordnete Strahlensender (2) und Strahlenempfänger (3), diesen jeweils zugeordnete Strahlformungsmittel (4) zur Parallelisierung der von dem Strahlensender (2) abgegebenen und zur Fokussierung der nach zumindest einer an der Außenfläche der Scheibe stattfindenden Reflexion dem Strahlenempfänger (3) zustrebenden Strahlung, sowie ein Koppelelement (5) zur Ein- und Auskopplung der optischen Strahlung in die Kraftfahrzeugscheibe, wobei zwischen dem Koppelelement (5) und dem ersten Schaltungsträger (1) ein mit Halteelementen (6') zur Aufnahme und Positionierung eines zweiten Schaltungsträgers (9) in der Nähe der Scheibe versehenes Konstruktionselement (6) angeordnet ist, **dadurch gekennzeichnet, dass** durch das Konstruktionselement (6) Mittel zur Einstellung des Abstandes der Strahlformungsmittel (4) von der Scheibe gebildet sind.

2. Optoelektronische Sensoreinrichtung nach Anspruch 1, **dadurch gekennzeichnet, dass** das Konstruktionselement (6) als Mittel zur Einstellung des Abstandes der Strahlformungsmittel (4) von der Scheibe Auflage- und/oder Abstützelemente (6") umfasst.

3. Optoelektronische Sensoreinrichtung nach Anspruch 1 oder 2, **dadurch gekennzeichnet, dass** das Konstruktionselement (6) als Abdeckung Teile des zweiten Schaltungsträgers (9) überdeckt, um Schutz gegen ESD oder Missbrauchskräfte zu bieten.

4. Optoelektronische Sensoreinrichtung nach Anspruch 3, **dadurch gekennzeichnet, dass** das Konstruktionselement (6) teilweise aus einem leitfähigen Material besteht.

5. Optoelektronische Sensoreinrichtung nach einem der Ansprüche 1 bis 4, **dadurch gekennzeichnet, dass** der zweite Schaltungsträger (9) mit dem ersten Schaltungsträger (1) mittels einer Steckverbindung (9') elektrisch verbunden ist.

6. Optoelektronische Sensoreinrichtung nach einem der Ansprüche 1 bis 5, **dadurch gekennzeichnet, dass** auf dem zweiten Schaltungsträger (9) Heizelemente vorhanden sind.

7. Optoelektronische Sensoreinrichtung nach einem der Ansprüche 1 bis 6, **dadurch gekennzeichnet, dass** auf dem zweiten Schaltungsträger (9) zusätzliche Strahlenempfänger (12) zur Erfassung der Lichtverhältnisse außerhalb des Kraftfahrzeuges und/oder zur Erfassung der in das Fahrzeug eindringenden Sonnenstrahlung und/oder zur Erfassung eines innen an der Kraftfahrzeug-Scheibe vorliegenden Beschlages vorhanden sind.

8. Optoelektronische Sensoreinrichtung nach Anspruch 7, **dadurch gekennzeichnet, dass** das Konstruktionselement (6) im Bereich seiner Überdeckung mit den zusätzlichen Strahlenempfängern (12) mit refraktiven oder diffraktiven Strukturen versehen ist.

9. Optoelektronische Sensoreinrichtung nach Anspruch 7 oder 8, **dadurch gekennzeichnet, dass** das Konstruktionselement (6) im Bereich seiner Überdeckung mit den zusätzlichen Strahlenempfängern (12) mit die Orts- und Winkelabhängigkeit bzw. die spektrale Zusammensetzung der Strahlung beeinflussenden Blendenstrukturen und/oder optischen Filtern versehen ist.

10. Optoelektronische Sensoreinrichtung nach einem der Ansprüche 1 bis 9, **dadurch gekennzeichnet, dass** das Konstruktionselement (6) als Abdeckung Teile der Strahlformungsmittel (4) überdeckt und mit refraktiven oder diffraktiven Stukturen versehen ist, die die Wirkung der Strahlformungsmittel (4) ergänzen und/oder erweitern.

11. Optoelektronische Sensoreinrichtung nach einem der Ansprüche 1 bis 10, **dadurch gekennzeichnet, dass** das Konstruktionselement (6) als Abdeckung Teile der Strahlformungsmittel (4) überdeckt und mit Blendenstrukturen versehen ist.

12. Optoelektronische Sensoreinrichtung nach einem der Ansprüche 1 bis 11, **dadurch gekennzeichnet, dass** das Konstruktionselement (6) als Abdeckung Teile der Strahlformungsmittel (4) überdeckt und mit optischen Filtereigenschaften versehen ist.

13. Optoelektronische Sensoreinrichtung nach Anspruch 12, **dadurch gekennzeichnet, dass** die optischen Filtereigenschaften die spektrale Zusammensetzung der Strahlung beeinflussen.

## Claims

1. Optoelectronic sensor device for detecting the wetting by precipitation on a transparent motor vehicle windscreen, comprising beam transmitters (2) and beam receivers (3) arranged on a first circuit carrier (1), beam shaping means (4) assigned to the same, respectively, for parallelising the radiation emitted by the beam transmitter (2) and converging on the beam receiver (3) for the purpose of focusing the said radiation following at least one reflection occurring on the outer surface of the windscreen, as well as a coupling element (5) for coupling the optical radiation into and out of the windscreen of the motor vehicle, with a structural element (6) which is provided with retention elements (6') for holding and positioning a second circuit carrier (9) and is located in the vicinity of the windscreen between the coupling element (5) and the first circuit carrier (1), **characterised in that** means for adjusting the distance of the beam shaping means (4) from the windscreen are constituted by the structural element (6).

2. Optoelectronic sensor device in accordance with Claim 1, **characterised in that** the structural element (6) comprises support and/or backing elements (6") as a medium for adjusting the distance of the beam shaping means (4) from the windscreen.

3. Optoelectronic sensor device in accordance with Claim 1 or Claim 2, **characterised in that** the structural element (6) covers parts of the second circuit carrier (9) as a covering in order to provide protection against ESD or abusive forces.

4. Optoelectronic sensor device in accordance with Claim 3, **characterised in that** the structural element (6) consists, in part, of a conductive material.

5. Optoelectronic sensor device in accordance with any of Claims 1 to 4, **characterised in that** the second circuit carrier (9) is electrically connected to the first circuit carrier (1) by means of a plug-type connector (9').

6. Optoelectronic sensor device in accordance with any of Claims 1 to 5, **characterised in that** heating elements are provided on the second circuit carrier (9).

7. Optoelectronic sensor device in accordance with any of Claims 1 to 6, **characterised in that** additional beam receivers (12) are provided on the second circuit carrier (9) for the purpose of detecting the light conditions outside the motor vehicle and/or for detecting the solar radiation entering the vehicle and/or for detecting any mist present on the inside of the windscreen of the motor vehicle.

8. Optoelectronic sensor device in accordance with Claim 7, **characterised in that**, in the area of its being covered by the additional beam receivers (12), the structural element (6) is provided with refractive or diffractive structures.

9. Optoelectronic sensor device in accordance with Claim 7 or Claim 8, **characterised in that**, in the area of its being covered by the additional beam receivers (12), the structural element (6) is provided with screen arrangements and/or optical filters influencing the position and angle dependency or the spectral composition of the radiation, as the case may be.

10. Optoelectronic sensor device in accordance with any of Claims 1 to 9, **characterised in that** the structural element (6) covers parts of the beam shaping means (4) as a covering and is provided with refractive or diffractive structures which supplement and/or expand the effect of the beam shaping means (4).

11. Optoelectronic sensor device in accordance with any of Claims 1 to 10, **characterised in that** the structural element (6) covers parts of the beam shaping means (4) as a covering and is provided with screen arrangements.

12. Optoelectronic sensor device in accordance with any of Claims 1 to 11, **characterised in that** the structural element (6) covers parts of the beam shaping means (4) as a covering and is provided with optical filter properties.

13. Optoelectronic sensor device in accordance with Claim 12, **characterised in that** the optical filter properties influence the spectral composition of the radiation.

## Revendications

1. Dispositif détecteur optoélectronique pour la saisie du mouillage d'une glace transparente de véhicule automobile par une précipitation, lequel dispositif comprend des émetteurs de rayons (2) et des récepteurs de rayons (3), qui sont disposés sur un premier circuit imprimé (1) et auxquels sont associés des moyens de formation de faisceaux (4) respectifs pour la mise en parallèle du rayonnement en provenance de l'émetteur de rayons (2) et pour la focalisation du rayonnement à destination du récepteur de rayons (3) après au moins une réflexion s'effectuant sur la face extérieure de la glace, ainsi qu'un élément de couplage (5) pour le couplage et le découplage du rayonnement optique dans la glace du véhicule automobile, un élément de construction (6), pourvu d'éléments de retenue (6'), destiné à la réception et au positionnement d'un deuxième circuit imprimé (9) à proximité de la glace, étant disposé entre l'élément de couplage (5) et le premier support de circuit imprimé (1), **caractérisé en ce que** des moyens de réglage de l'intervalle de la distance entre les moyens de formation de faisceaux (4) et la glace sont formés par l'élément de construction (6).

2. Dispositif détecteur optoélectronique selon la revendication 1, **caractérisé en ce que** l'élément de construction (6), en tant que moyen de réglage de la distance entre les moyens de formation de faisceaux (4) et la glace, comprend des éléments d'appui et / ou de support (6").

3. Dispositif détecteur optoélectronique selon revendication 1 ou 2, **caractérisé en ce que** l'élément de construction (6) recouvre, en tant que cache, le deuxième support de circuit imprimé (9) pour assurer une protection contre l'ESD et les abus.

4. Dispositif détecteur optoélectronique selon la revendication 3, **caractérisé en ce que** l'élément de construction (6) consiste partiellement en une matière conductible.

5. Dispositif détecteur optoélectronique selon l'une des revendications 1 à 4, **caractérisé en ce que** le deuxième support de circuit imprimé (9) est électriquement relié au premier support de circuit imprimé (1) au moyen d'un raccordement à fiches (9').

6. Dispositif détecteur optoélectronique selon l'une des revendications 1 à 5, **caractérisé en ce que** des éléments de chauffage sont prévus sur le deuxième support de circuit imprimé (9).

7. Dispositif détecteur optoélectronique selon l'une des revendications 1 à 6, **caractérisé en ce que** des récepteurs de rayons supplémentaires (12) sont prévus sur le deuxième support de circuit imprimé (9) pour la détection des conditions de luminosité en dehors du véhicule automobile et / ou pour la détection des rayons solaires pénétrant dans le véhicule automobile et / ou pour la détection de condensation présente sur la glace du véhicule automobile.

8. Dispositif détecteur optoélectronique selon la revendication 7, **caractérisé en ce que** l'élément de construction (6) est présente, dans la région de son couvercle, les récepteurs de rayons supplémentaires (12), avec des surfaces réfractives et diffractives.

9. Dispositif détecteur optoélectronique selon revendication 7 ou 8, **caractérisé en ce que**, dans la région de son couvercle, l'élément de construction (6) est pourvus des récepteurs de rayons supplémentaires (12), avec des structures de blende et ou des filtres optiques, qui influencent la dépendance du lieu et ou de l'angle, respectivement la composition spectrale.

10. Dispositif détecteur optoélectronique selon l'une des revendications 1 à 9, **caractérisé en ce que** l'élément de construction (6) recouvre, en tant que cache, des parties des moyens de formation de faisceaux (4) et est pourvu de structures réfractive ou diffractives, qui complètent et / ou augmentent les moyens de formation de faisceaux (4).

11. Dispositif détecteur optoélectronique selon l'une des revendications 1 à 10, **caractérisé en ce que** l'élément de construction (6) recouvre, en tant que cache, des parties des moyens de formation de faisceaux (4) et est pourvu de structures d'obturation.

12. Dispositif détecteur optoélectronique selon l'une des revendications 1 à 11, **caractérisé en ce que** l'élément de construction (6) recouvre, en tant que cache, des parties des moyens de formation de faisceaux (4) et possède des propriétés optiques de filtre.

13. Dispositif détecteur optoélectronique selon la revendication 12, **caractérisé en ce que** les propriétés optiques de filtre influencent la composition spectrale du rayonnement.
